# FASCICULE DE BREVET EUROPEEN

(11) **EP 0 738 487 B1**
(45) Date de publication et mention de la délivrance du brevet: **12.01.2000**
(21) Numéro de dépôt: 96400840.3
(22) Date de dépôt: 19.04.1996
(51) Int. Cl.: A47B 95/04, F16B 12/46

(54) **Procédé d'assemblage d'éléments de mobilier et mobilier résultant de cet assemblage**
Zusammenbauverfahren für Möbelelemente und Möbel das von diesen Zusammenbau gebildet ist
Assembly procedure for furniture elements and furniture obtained from this assembly

(30) Priorité: 20.04.1995 FR 9504717
(43) Date de publication de la demande: 23.10.1996
(73) Titulaire: GAUTIER FRANCE S.A., 85510 Le Boupère (FR)
(72) Inventeur: Guesdon, Robert J., 85500 Les Herbiers (FR)
(74) Mandataire: Busnel, Jean-Benoît

(56) Documents cités:
- EP-A- 0 125 336
- DE-A- 1 528 345
- DE-A- 4 220 212
- US-A- 4 840 440

## Description

La présente invention concerne un procédé d'assemblage d'éléments de mobilier ainsi qu'un mobilier résultant de cet assemblage.

Il est déjà connu d'assembler des éléments de mobilier et notamment des panneaux selon un angle déterminé par exemple en équerre, en effectuant un usinage des bords respectifs de deux éléments à assembler pour façonner des chants de liaison biseautés.

Cependant, l'arête extérieure de chaque chant de liaison est fragile. Ainsi par exemple, pour un assemblage en équerre, les chants de liaison sont biseautés à 45° et par suite leur arête extérieure est en pointe. Or cette pointe est exposée aux chocs même avant l'assemblage des divers éléments. En outre, l'ajustement des éléments entre eux est une opération délicate qui a des conséquences tant sur la solidité du mobilier que sur son aspect esthétique.

L'invention a pour but de résoudre ces problèmes de manière satisfaisante.

Ce but est atteint, selon l'invention, au moyen d'un procédé d'assemblage d'éléments de mobilier, caractérisé en ce qu'on procède à la pose, sur les chants droits latéraux de deux éléments à assembler, d'une bande de matière plastique dont la largeur est supérieure ou égale à la largeur des chants, l'affleurage de ladite bande, l'usinage des éléments avec leur bande pour façonner des chants de liaison biseautés en laissant sur l'arête extérieure de chaque chant une partie de la bande de façon à former ainsi une baguette de renfort et on réalise sur chacun des chants une rainure longitudinale dans laquelle on vient loger et fixer l'une des ailes d'un profilé métallique de façon à solidariser les deux éléments entre eux.

Selon une caractéristique avantageuse, l'affleurage de ladite bande produit des bords extérieurs à profil curviligne.

Selon une variante de mise en oeuvre, avant l'usinage, on réalise sur le chant apparent des éléments une gorge longitudinale dans laquelle on engage la nervure longitudinale de fixation d'un profilé d'encadrement ou d'un chanteau dont les chants latéraux sont destinés à recevoir ladite bande de renfort.

De préférence, on pose ladite bande sur lesdits éléments ainsi que sur le profilé d'encadrement en la fixant par collage.

Selon une autre caractéristique, l'usinage façonne un chant de liaison biseauté 45°.

Un autre objet de l'invention est un mobilier constitué de l'assemblage de plusieurs éléments selon des chants de liaison biseautés, caractérisé en ce que chacun des chants de liaison possède, d'une part, une arête extérieure avec une facette longitudinale sur laquelle est fixée une baguette de renfort formée par une bande de matière plastique, et d'autre part, une rainure longitudinale dans laquelle est logée et fixée l'une des ailes d'un profilé métallique de jonction.

Cette baguette peut être réalisée notamment par usinage des éléments selon le procédé de l'invention ci-dessus.

Dans ce mobilier, le bord extérieur de ladite baguette a un profil curviligne et ladite facette est perpendiculaire à la face extérieure de l'élément à assembler.

Avantageusement, les ailes dudit profilé métallique de jonction comportent des crans de retenue.

Selon un mode de réalisation particulier, les chants apparents desdits éléments sont pourvus de profilés d'encadrement.

Le procédé de l'invention produit un mobilier constitué d'un assemblage très résistant et esthétique du fait que les zones de liaison ne sont pas apparentes.

En outre, les zones angulaires sont bien protégées des chocs grâce à la baguette de renfort.

L'invention sera mieux comprise à la lecture de la description qui va suivre accompagnée des dessins sur lesquels :
- la figure 1 représente une vue en perspective de l'assemblage selon l'invention de deux éléments de mobilier ; et
- la figure 2 représente une vue en coupe selon la ligne II-II de l'assemblage de la figure 1.

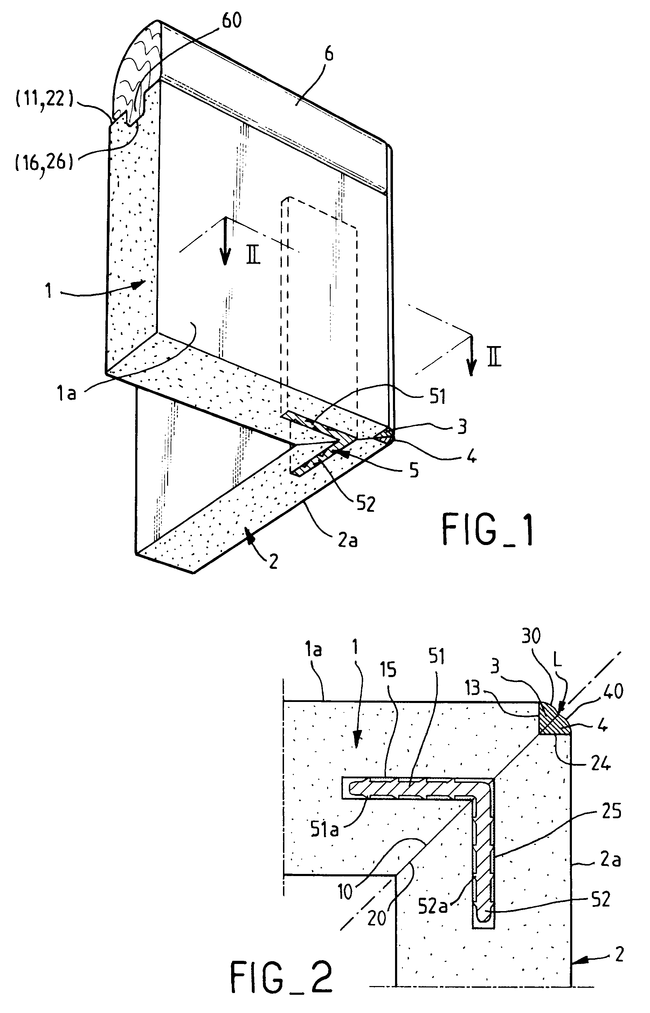

Le procédé d'assemblage de l'invention produit un meuble tel qu'illustré partiellement sur les figures 1 et 2. Il comprend d'abord la pose, sur les chants droits latéraux de deux éléments 1, 2 à assembler (qui sont ici des panneaux en particules de bois agglomérés), d'une bande de matière plastique, par exemple en PVC. La largeur de cette bande est supérieure ou égale à la largeur des chants latéraux.

On effectue ensuite l'affleurage de ladite bande pour l'ajuster aux dimensions des chants latéraux et pour lui donner, le cas échéant, des bords extérieurs à profil curviligne. Puis on procède à l'usinage des éléments 1,2 avec leur bande respective pour façonner des chants de liaison 10, 20 biseautés par exemple à 45° (comme représenté sur les figures) en laissant sur l'arête extérieure de chaque chant une partie de la bande de façon à former ainsi une baguette de renfort 3,4. Cette opération permet de supprimer l'angle vif de l'assemblage des deux éléments 1,2 et ménage ainsi une facette 13, 24 perpendiculaire à la face extérieure apparente 1a, 2a de l'élément à assembler sur laquelle est fixée la baguette 3,4. On réalise ensuite sur chaque chant 10, 20 une rainure longitudinale 15, 25 dans laquelle on vient loger et fixer l'une des ailes 51, 52 d'un profilé métallique 5 de façon à solidariser les deux éléments 1, 2 entre eux. Les ailes 51, 52 du profilé 5 sont perpendiculaires pour un assemblage à 90° avec des chants de liaison biseautés à 45° et comportent des crans 51a, 52a de retenue. La bande et la baguette 3, 4 sont donc fixées par exemple par collage sur toute la longueur des chants de liaison 10, 20.

On peut compléter l'assemblage décrit ci-dessus en réalisant, avant l'usinage, une gorge longitudinale 16, 26 sur le chant apparent plat 11, 22 des éléments 1, 2 dans laquelle on engage la nervure longitudinale 60 de fixation d'un profilé d'encadrement 6 ou d'un chanteau. Dans ce cas, la rainure 15, 25 et le profilé 5 s'arrêtent à une distance suffisante du chant apparent 11, 22 pour ne pas rencontrer la gorge 16, 26. Les chants latéraux du profilé 6 sont destinés à recevoir la bande et à subir l'usinage de façon différée ou simultanément avec l'élément 1, 2 sur lequel il est fixé. La bande et la baguette formée par usinage sont d'une seule pièce avec celle qui garnit l'élément 2 lui-même, comme illustré sur la figure, ou éventuellement une autre bande ou baguette rapportée dans le prolongement de celle dudit élément.

## Revendications

1. Procédé d'assemblage d'éléments de mobilier (1,2), caractérisé en ce qu'on procède à la pose, sur les chants droits latéraux de deux éléments à assembler, d'une bande de matière plastique dont la largeur est supérieure ou égale à la largeur des chants, l'affleurage de ladite bande, l'usinage des éléments avec leur bande pour façonner des chants de liaison (10,20) biseautés en laissant sur l'arête extérieure de chaque chant une partie de la bande de façon à former ainsi une baguette de renfort (3,4) et on réalise sur chacun des chants une rainure longitudinale (15,25) dans laquelle on vient loger et fixer l'une des ailes (51,52) d'un profilé métallique (5) de façon à solidariser les deux éléments entre eux.

2. Procédé selon la revendication 1, caractérisé en ce que l'affleurage de ladite bande produit des bords extérieurs à profil curviligne (30,40).

3. Procédé selon l'une des revendications précédentes, caractérisé en ce que, avant l'usinage, on réalise sur le chant apparent (11,22) des éléments (1,2) une gorge longitudinale (16,26) dans laquelle on engage la nervure longitudinale (60) de fixation d'un profilé d'encadrement (6) ou d'un chanteau dont les chants latéraux sont destinés à recevoir ladite bande.

4. Procédé selon l'une des revendications précédentes, caractérisé en ce que ladite bande est fixée par collage.

5. Procédé selon l'une des revendications précédentes, caractérisé en ce que l'usinage façonne un chant de liaison (10,20) biseauté à 45°.

6. Mobilier constitué de l'assemblage de plusieurs éléments (1,2) selon des chants de liaison (10,20) biseautés, caractérisé en ce que chacun des chants de liaison (10,20) possède, d'une part une arête extérieure avec une facette longitudinale (13,24) sur laquelle est fixée une baguette de renfort (3,4) formée par une bande de matière plastique et, d'autre part, une rainure longitudinale (15,25) dans laquelle est logée et fixée l'une des ailes (51,52) d'un profilé métallique (5) de jonction.

7. Mobilier selon la revendication 6, caractérisé en ce que le bord extérieur (30,40) de ladite baguette (3,4) a un profil curviligne.

8. Mobilier selon la revendication 6 ou 7, caractérisé en ce que ladite facette (13,24) est perpendiculaire à la face extérieure (1a,2a) de l'élément (1,2) à assembler.

9. Mobilier selon l'une des revendications 6 à 8, caractérisé en ce que les ailes (51,52) dudit profilé métallique (5) de jonction comportent des crans de retenue (51a,52a).

10. Mobilier selon l'une des revendications 6 à 9, caractérisé en ce que les chants apparents (11,22) desdits éléments (1,2) sont pourvus de profilés d'encadrement (6).

## Claims

1. Method for assembling furniture components (1, 2), characterised in that a strip of plastic material, the width of which is greater than or equal to the width of the lateral straight edges of two components to be assembled, is placed on said edges, said strip is made flush, the components together with their strip are machined in order to shape the bevelled connecting edges (10, 20) while leaving a portion of the strip on the outer ridge of each edge so as to form a strengthening bead (3, 4) and a longitudinal slot (15, 25) is made on each of the edges, inside which slot one of the wings (51, 52) of a metal profile (5) is housed and fixed so as to lock the two components together.

2. Method according to Claim 1, characterised in that the making flush of said strip produces outer edges with a curvilinear profile (30, 40).

3. Method according to one of the preceding claims, characterised in that, before the machining, a longitudinal groove (16, 26) is made on the visible edge (11, 22) of the components (1, 2) into which groove the longitudinal fixing rib (60) of a framing profile (6) or of a cant, the lateral edges of which are intended to receive said strip.

4. Method according to one of the preceding claims, characterised in that said strip is fixed by gluing.

5. Method according to one of the preceding claims, characterised in that the machining shapes a connecting edge (10, 20) bevelled at 45°.

6. Furniture constituted by the assembling of several components (1, 2) along bevelled connecting edges (10, 20), characterised in that each of the connecting edges (10, 20) has, on the one hand, an outer ridge with a longitudinal facet (13, 24) on which is fixed a strengthening bead (3, 4) formed by a strip of plastic material and, on the other hand, a longitudinal slot (15, 25) in which one of the wings (51, 52) of a metal joining profile (5) is housed and fixed.

7. Furniture according to Claim 6, characterised in that the outer edge (30, 40) of said bead (3, 4) has a curvilinear profile.

8. Furniture according to Claim 6 or 7, characterised in that said facet (13, 24) is perpendicular to the outer face (1a, 2a) of the component (1, 2) to be assembled.

9. Furniture according to one of Claims 6 to 8, characterised in that the wings (51, 52) of said metal joining profile (5) have retaining notches (51a, 52a).

10. Furniture according to one of Claims 6 to 9, characterised in that the visible edges (11, 22) of said components (1, 2) are provided with framing profiles (6).

## Patentansprüche

1. Verfahren zum Zusammenbau von Möbelelementen (1,2), dadurch gekennzeichnet, daß an den zusammenzufügenden seitlichen geraden Schmalseiten zweier Elemente ein Streifen aus Kunststoffmaterial angebracht wird, dessen Breite größer oder gleich der Breite der Schmalseite ist, der genannte Streifen ausgeglichen wird und die Elemente mit ihren Streifen bearbeitet werden, um die zur Verbindung dienenden abgeschrägten Schmalseiten (10,20) zu formen, wobei auf der äußeren Anlagefläche jeder Schmalseite ein Teil des Streifens stehengelassen wird, um so eine Verstärkungsleiste (3,4) zu bilden, und daß an jeder der Schmalseiten eine Längsrille (15,25) angebracht wird, in die einer der Flügel (51,52) eines Metallprofils (5) eingesetzt wird, um die beiden Elemente miteinander zu verbinden.

2. Verfahren nach Anspruch 1, dadurch gekennzeichnet, daß das Ausgleichen des genannten Streifens äußere Ränder mit abgerundetem Profil (30,40) erzeugt.

3. Verfahren nach einem der vorhergehenden Ansprüche, dadurch gekennzeichnet, daß vor Durchführung der Bearbeitung auf den sichtbaren Schmalseiten (11,22) der Elemente (1,2) eine Längsnut (16,26) angebracht wird, in die eine Befestigungsrippe (60) eines Umrahmungsprofils (6) oder eines Einsatzstücks eingesetzt wird, dessen seitliche Schmalseiten dafür vorgesehen sind, den genannten Streifen aufzunehmen.

4. Verfahren nach einem der vorhergehenden Ansprüche, dadurch gekennzeichnet, daß der genannte Streifen durch Klebung befestigt wird.

5. Verfahren nach einem der vorhergehenden Ansprüche, dadurch gekennzeichnet, daß durch die Bearbeitung eine Verbindungsschmalseite (10,20) hergestellt wird, die eine Schrägung von 45° aufweist.

6. Möbelstück, das durch den Zusammenbau mehrerer Elemente (1,2) entlang abgeschrägter Verbindungsschmalseiten (10,20) hergestellt wird, dadurch gekennzeichnet, daß jede Verbindungsschmalseite (10,20) einerseits eine äußere Anlagefläche mit einer langgestreckten Schlifffläche (13,24), auf der eine Verstärkungsleiste (3,4) aus einem Kunststoffprofil befestigt ist, und andererseits eine Längsrille (15,25) aufweist, in der einer der Flügel (51,52) eines metallischen Verbindungsprofils eingebettet und befestigt ist.

7. Möbelstück nach Anspruch 6, dadurch gekennzeichnet, daß der Außenrand (30,40) der genannten Leiste (3,4) ein abgerundetes Profil aufweist.

8. Möbelstück nach Anspruch 6 oder 7, dadurch gekennzeichnet, daß die genannte Schlifffläche (13,24) senkrecht zu der Außenfläche (1a,2a) des jeweiligen zusammenzufügenden Elements (1,2) liegt.

9. Möbelstück nach einem der Ansprüche 6 bis 8, dadurch gekennzeichnet, daß die Flügel (51,52) des metallischen Verbindungsprofils (5) Haltekerben (51a,52a) aufweisen.

10. Möbelstück nach einem der Ansprüche 6 bis 9, dadurch gekennzeichnet, daß die sichtbaren Schmalseiten (11,22) der genannten Elemente (1,2) mit Rahmenprofilen (6) versehen sind.
